# EUROPEAN PATENT APPLICATION

(11) **EP 4 546 836 A1**
(43) Date of publication of application: **30.04.2025**
(21) Application number: 23853843.3
(22) Date of filing: 09.03.2023
(51) Int. Cl.: H04W 8/24

(54) **TERMINAL CAPABILITY REPORTING METHOD, TERMINAL CAPABILITY PROCESSING METHOD, TERMINAL DEVICE, NETWORK DEVICE, AND MEDIUM**

(30) Priority: 16.08.2022 CN 202210981305
(71) Applicant: ZTE CORPORATION, Shenzhen, Guangdong 518057 (CN)
(72) Inventor: GAO, Minggang, Shenzhen, Guangdong 518057 (CN); DING, Xuemei, Shenzhen, Guangdong 518057 (CN); XU, Ying, Shenzhen, Guangdong 518057 (CN); LEI, Chao, Shenzhen, Guangdong 518057 (CN)
(74) Representative: Ziebig Hengelhaupt Intellectual Property Attorneys Patentanwaltskanzlei PartGmbB
(86) International application number: PCT/CN2023/080605
(87) International publication number: WO 2024/036926

(57) **Abstract**

The embodiments of the present invention belong to the technical field of communications. Provided are a terminal capability reporting method, a terminal capability processing method, a terminal device, a network device, and a storage medium. The terminal capability processing method comprises: sending a capability query instruction to a terminal device, so that the terminal device generates terminal capability information according to the capability query instruction, wherein the terminal capability information comprises a frequency band capability set and identification information, and the identification information is used for indicating whether the terminal device has a surplus frequency band capability set; and receiving the terminal capability information, and when it is detected that the frequency band capability set does not comprise a target frequency band combination, performing target frequency band query or target frequency band configuration on the terminal device according to the identification information, so as to determine whether the terminal device supports the target frequency band combination, wherein the target frequency band combination comprises target frequency band information of a first network and target frequency band information of a second network. The embodiments of the present application aim to accurately determine whether the terminal device supports the current frequency band combination.

## Description

### TECHNICAL FIELD

Embodiments of the present disclosure relate to the technical field of communications, in particular to a terminal capability reporting method, a terminal capability processing method, a terminal device, a network device, and a storage medium.

### BACKGROUND

With the large-scale spread of 5G new radio (5G NR), industrial application fields of 5G are also becoming more and more extensive. 5G opens two major network architectures, standalone access (SA) and non-standalone access (NSA), and corresponding frequency band capability sets supported by terminals are also becoming increasingly cumbersome. Although 3GPP has made numerous efforts to achieve on-demand reporting, in accordance with a current mechanism, especially in a case of NSA, a terminal device can only report a part of frequency band combinations to a network in accordance with existing limitations because a large number of frequency bands are included and the terminal device supports too many terminal capability sets. Therefore, capability reporting of the terminal device cannot contain all the supported frequency band combinations, which makes a network device mistakenly consider that the terminal device does not support a current frequency band combination, resulting in that a communication cell of a corresponding frequency band cannot be added to the terminal device.

### SUMMARY

A main objective of embodiments of the present disclosure is to provide a terminal capability reporting method, a terminal capability processing method, a network device, a terminal device, and a storage medium, aiming to accurately determine whether the terminal device supports a current frequency band combination, and accurately add a communication cell of a corresponding frequency band to the terminal device.

In a first aspect, an embodiment of the present disclosure further provides a terminal capability processing method, applied to a network device, including: sending a capability query instruction to a terminal device, so that the terminal device generates terminal capability information according to the capability query instruction, wherein the terminal capability information includes a frequency band capability set and identification information, and the identification information is used for indicating whether the terminal device has a surplus frequency band capability set; and receiving the terminal capability information, and when it is detected that the frequency band capability set does not include a target frequency band combination, performing target frequency band query or target frequency band configuration on the terminal device according to the identification information, so as to determine whether the terminal device supports the target frequency band combination, wherein the target frequency band combination includes target frequency band information of a first network and target frequency band information of a second network.

In a second aspect, an embodiment of the present disclosure further provides a terminal capability reporting method, applied to a terminal device, including: obtaining a capability query instruction sent by a network device, and determining terminal capability information according to the capability query instruction, wherein the terminal capability information includes a frequency band capability set and identification information, and the identification information is used for indicating whether the terminal device has a surplus frequency band capability set; and sending the terminal capability information to the network device, so that the network device performs, when detecting that the frequency band capability set does not include a target frequency band combination, target frequency band query or target frequency band configuration on the terminal device according to the identification information, so as to determine whether the terminal device supports the target frequency band combination, wherein the target frequency band combination includes target frequency band information of a first network and target frequency band information of a second network.

In a third aspect, an embodiment of the present disclosure further provides a network device. The network device includes a processor, a memory, a computer program stored on the memory and capable of being executed by the processor, and a data bus for implementing a connected communication between the processor and the memory, wherein the computer program, when executed by the processor, implements steps of any terminal capability processing method applied to the network device as provided by the specification of the present disclosure.

In a fourth aspect, an embodiment of the present disclosure further provides a terminal device, including a processor, a memory, a computer program stored on the memory and capable of being executed by the processor, and a data bus for implementing a connected communication between the processor and the memory, wherein the computer program, when executed by the processor, implements steps of any terminal capability reporting method applied to the terminal device as provided by the specification of the present disclosure.

In a fifth aspect, an embodiment of the present disclosure further provides a storage medium, used for computer readable storage, storing one or more programs, and the one or more programs can be executed by one or more processors to implement steps of any terminal capability processing method applied to the network device or steps of any terminal capability reporting method applied to the terminal device as provided by the specification of the present disclosure.

### BRIEF DESCRIPTION OF DRAWINGS

In order to explain technical solutions of embodiments of the present application more clearly, the following will briefly introduce accompanying drawings that need to be used in the description of the embodiments. Apparently, the accompanying drawings in the following description are some embodiments of the present application, and other accompanying drawings may further be obtained from these accompanying drawings without creative labor for those of ordinary skill in the art.
FIG. 1 is a schematic flowchart of a terminal capability processing method applied to a network device provided by an embodiment of the present disclosure.
FIG. 2 is a schematic flowchart of a terminal capability reporting method applied to a terminal device provided by an embodiment of the present disclosure.
FIG. 3 is a diagram of an application scenario of a terminal capability reporting method and using method provided by an embodiment of the present disclosure.
FIG. 4 is a schematic structural block diagram of a network device provided by an embodiment of the present disclosure.
FIG. 5 is a schematic structural block diagram of a terminal device provided by an embodiment of the present disclosure.

### DETAILED DESCRIPTION OF THE INVENTION

Technical solutions in embodiments of the present disclosure will be clearly and completely described below in conjunction with accompanying drawings in the embodiments of the present disclosure. Obviously, the described embodiments are part, but not all, of the embodiments of the present disclosure. Based on the embodiments in the present disclosure, all other embodiments obtained by those of ordinary skill in the art without creative labor shall fall within the protection scope of the embodiments of the present disclosure.

Flowcharts shown in the accompanying drawings are only illustrative and do not have to include all contents and operations/steps, nor do they have to be executed in the order described. For example, some operations/steps may further be broken down, combined or partially merged, so that the actual order of execution is likely to change according to the actual situation.

It should be understood that terms used in the specification of the embodiments of the present disclosure are only for the purpose of describing specific embodiments, and are not intended to limit the embodiments of the present disclosure. As used in the specification of the embodiments of the present disclosure and in the appended claims, singular forms "one", "a", and "the" are intended to include plural forms unless the context clearly indicates otherwise.

First, in order to better understand the solutions of the embodiments of the present application, the related art involved and existing technical problems are introduced below.

5G opens up two major network architectures, specifically including standalone access (SA) and non-standalone access (NSA), and corresponding frequency band support capabilities of terminal devices are also becoming increasingly cumbersome. Although 3GPP has made numerous efforts to achieve on-demand reporting, in accordance with a current mechanism, especially in a case of NSA, a terminal device can only report a part of frequency band combinations to a network device in accordance with existing limitations because frequency band combinations are too many in actual test. Therefore, the network side may have misunderstanding, and thus not add a 5G communication cell to the terminal device.

Exemplarily, the terminal device supports LTE B1/2/3/4/5/7/8/38/39/40/41 and NR N1/2/3/5/7/8/78/79/... etc. For the NSA, it may happen that the terminal device reports frequency band combination capabilities of LTE beyond the number of combinations limited by a current protocol. For example, the current protocol limits that when the number of combinations exceeds 128, the terminal device may decide by itself which combinations to report to ensure that there are no more than 128 combinations. There are too many supported frequency band combinations, resulting in the terminal device failing to report NSA frequency band combinations expected by the network device. The network device thus believes that the terminal does not support the current NSA combinations, resulting in not adding the 5G cell to the terminal. Currently, only a frequency band locking method can be used manually, forcing some of frequency band capabilities to be cut off, so that the terminal can be registered to the current NSA network. But this method cannot solve the problem from the root.

The embodiments of the present disclosure provide a terminal capability processing method, a terminal capability reporting method, a network device, a terminal device, and a storage medium. The terminal capability processing method may be applied to the network device, so that whether the terminal device supports a current frequency band combination may be accurately determined, and a communication cell of a corresponding frequency band is accurately added to the terminal device.

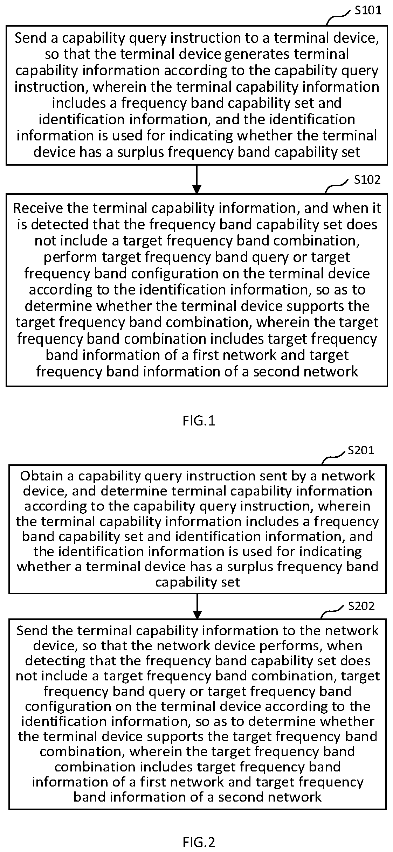

Please refer to FIG. 1, and FIG. 1 is a schematic flowchart of a terminal capability processing method provided by an embodiment of the present disclosure. The terminal capability processing method can accurately determine whether a terminal device supports a current frequency band combination, and accurately add a communication cell of a corresponding frequency band to the terminal device. A network device may be a base station, a gateway, etc.

As shown in FIG. 1, the terminal capability processing method may include step S101 to step S102.

At step S101, a capability query instruction is sent to the terminal device, so that the terminal device generates terminal capability information according to the capability query instruction, wherein the terminal capability information includes a frequency band capability set and identification information, and the identification information is used for indicating whether the terminal device has a surplus frequency band capability set.

The capability query instruction is generated by the network device and is used for instructing the terminal device to query the frequency band capability set which the terminal device supports and to generate the corresponding terminal capability information. The terminal capability information includes the frequency band capability set and the identification information. The frequency band capability set may be an NSA frequency band set, the NSA frequency band set consists of frequency band information of a first network and frequency band information of a second network, and for example, the NSA frequency band set may be formed by combining a frequency band corresponding to a 4G network with a frequency band corresponding to a 5G network.

Exemplarily, the frequency band capability set may include NSA frequency band sets such as B1+N78, B1+N41, B1+N1, B7+N78, and B7+N41.

In some cases, the identification information is used for indicating whether the terminal device has the surplus frequency band capability set, i.e., representing whether the terminal device still has an unreported frequency band capability set after the terminal device reports one or more frequency band capability sets.

Exemplarily, the identification information may indicate that the terminal device has the surplus frequency band capability set by means of an identification bit "1"; and the identification information may indicate that the terminal device does not have the surplus frequency band capability set by means of an identification bit "0".

In order to accurately add the communication cell of the corresponding frequency band to the terminal device, it may be preconfigured that the network device sends the capability query instruction to the terminal device, for example, configured as that when the network device needs to determine whether the terminal device supports the current frequency band combination, the network device generates the capability query instruction and sends capability query instruction to the corresponding terminal device, so that the terminal device generates the terminal capability information according to the capability query instruction.

At step S102, the terminal capability information is received, and when it is detected that the frequency band capability set does not include a target frequency band combination, target frequency band query or target frequency band configuration is performed on the terminal device according to the identification information, so as to determine whether the terminal device supports the target frequency band combination, wherein the target frequency band combination includes target frequency band information of a first network and target frequency band information of a second network.

The target frequency band combination is a frequency band combination that the network device needs to determine whether the terminal device supports, and the target frequency band combination includes the target frequency band information of the first network and the target frequency band information of the second network. The first network may be 4G, 5G or 6G, etc., the second network may also be 4G, 5G or 6G, etc., but in the target frequency band combination, the type of the first network differs from that of the second network, i.e., if the first network is 4G, the second network can only be 5G or 6G.

Exemplarily, the frequency band information of the first network may be frequency bands such as B1, B3, and B7; and the frequency band information of the second network may be frequency bands such as N78, N41, and N7. It needs to be noted that the frequency band information of the first network may also be frequency bands such as N78, N41, and N7, and the frequency band information of the second network may be frequency bands such as B1, B3, and B7, which is not specifically limited herein.

In the embodiment of the present disclosure, the network device sends the capability query instruction to the terminal device, so that the terminal device generates the terminal capability information according to the capability query instruction and sends it to the network device; and when detecting that the frequency band capability set does not include the target frequency band combination, the network device performs the target frequency band query on the terminal device according to the identification information, so as to determine whether the terminal device supports the target frequency band combination, so that whether the terminal device supports the current frequency band combination may be accurately determined, and the communication cell of the corresponding frequency band is accurately added to the terminal device.

In some embodiments, the terminal capability information is received, whether the frequency band capability set includes the target frequency band combination is detected, and when it is detected that the frequency band capability set includes the target frequency band combination, it is determined that the terminal device supports the target frequency band combination. That is, the network device may determine that the terminal device supports the target frequency band combination. Therefore, it may be quickly determined that the terminal device supports the current frequency band combination.

Exemplarily, the network device receives the terminal capability information sent by the terminal device, the terminal capability information includes the frequency band capability set, and the frequency band capability set thereof includes NSA frequency band sets such as B1+N78, B1+N41, B1+N1, B7+N78, and B7+N41. If the target frequency band combination is B1+N78, it may be determined that the frequency band capability set includes the target frequency band combination, and then it is determined that the terminal device supports the target frequency band combination.

In some embodiments, the terminal capability information is received, whether the frequency band capability set includes the target frequency band combination is detected, when it is detected that the frequency band capability set does not include the target frequency band combination and the identification information indicates that the terminal device has the surplus frequency band capability set, a terminal surplus capability query instruction is sent to the terminal device, so that the terminal device determines terminal surplus capability information according to the terminal surplus capability query instruction, where the terminal surplus capability information includes the surplus frequency band capability set and updated identification information; and the terminal surplus capability information is received, and when it is detected that the surplus frequency band capability set does not include the target frequency band combination, the target frequency band query is performed on the terminal device according to the updated identification information, so as to determine whether the terminal device supports the target frequency band combination, until the updated identification information indicates that the terminal device does not have a surplus capability. This allows the network device to accurately and completely obtain the frequency band capability set of the terminal device, so that whether the terminal device supports the current frequency band combination may be accurately determined, and the communication cell of the corresponding frequency band is accurately added to the terminal device.

The terminal surplus capability query instruction is generated by the network device and is used for instructing the terminal device to query the unreported frequency band capability set which the terminal device supports and to generate the corresponding terminal surplus capability information. The terminal surplus capability information may include the surplus frequency band capability set and the updated identification information, and the surplus frequency band capability set may be an NSA frequency band set after the terminal device screens the surplus frequency band capability set.

In some cases, the terminal surplus capability information is received, whether the surplus frequency band capability set includes the target frequency band combination is detected, and when it is detected that the surplus frequency band capability set includes the target frequency band combination, it is determined that the terminal device supports the target frequency band combination. That is, the network device may determine that the terminal device supports the target frequency band combination. Therefore, it may be quickly determined that the terminal device supports the current frequency band combination.

In some cases, when it is detected that the surplus frequency band capability set does not include the target frequency band combination, if the updated identification information indicates that the terminal device still has the surplus frequency band capability set, the network device continues to generate a terminal surplus capability query instruction to obtain the surplus frequency band capability set until all the frequency band capability sets supported by the terminal device are obtained, i.e., the updated identification information indicates that the terminal device does not have a surplus capability.

In some embodiments, the terminal capability information is received, whether the frequency band capability set includes the target frequency band combination is detected, and when it is detected that the frequency band capability set does not include the target frequency band combination and the identification information indicates that the terminal device has the surplus frequency band capability set, a target frequency band configuration instruction is sent to the terminal device, so that the terminal device performs the target frequency band configuration according to the target frequency band configuration instruction to generate a target frequency band configuration result; and the target frequency band configuration result is received, and whether the terminal device supports the target frequency band combination is determined according to the target frequency band configuration result. Thus, the time for network registration is reduced, the efficiency of the network device in determining the frequency band combinations supported by the terminal device is improved, whether the terminal device supports the current frequency band combination is accurately determined, and the communication cell of the corresponding frequency band is accurately added to the terminal device.

The target frequency band configuration instruction includes network configuration information corresponding to the target frequency band combination, and is used for directly adding the corresponding target frequency band combination to the terminal device so as to determine whether the terminal device supports the target frequency band combination. The target frequency band configuration result is used for indicating whether the terminal device supports the target frequency band combination.

Exemplarily, the network device receives the terminal capability information sent by the terminal device, the terminal capability information includes the frequency band capability set, and the frequency band capability set thereof includes NSA frequency band sets such as B1+N78, B1+N41, B1+N1, B7+N78, and B7+N41. If the target frequency band combination is B1+N79, it may be determined that the frequency band capability set does not include the target frequency band combination, and then it is determined that the terminal device does not support the target frequency band combination. If at this time the identification information indicates that the terminal device has the surplus frequency band capability set, the network device may send a target frequency band configuration instruction corresponding to the target frequency band combination, i.e., B1+N79, to the terminal device, so that the terminal device directly configures the target frequency band combination, i.e., B1+N79, so as to generate a target frequency band configuration result. The target frequency band configuration result sent by the terminal device is received, and whether the terminal device supports the target frequency band combination is determined according to the target frequency band configuration result.

Please refer to FIG. 2, and FIG. 2 is a schematic flowchart of a terminal capability reporting method provided by an embodiment of the present disclosure. The terminal capability reporting method may accurately determine whether a terminal device supports a current frequency band combination, and accurately add a communication cell of a corresponding frequency band to the terminal device. The terminal capability reporting method may be applied in the terminal device, and the terminal device may be a smartphone, a tablet, a laptop, a desktop computer, a smart speaker, a smart watch, etc., but is not limited thereto.

As shown in FIG. 2, the terminal capability processing method includes step S201 to step S202.

At step S201, a capability query instruction sent by a network device is obtained, and terminal capability information is determined according to the capability query instruction, the terminal capability information includes a frequency band capability set and identification information, and the identification information is used for indicating whether the terminal device has a surplus frequency band capability set.

The capability query instruction is generated by the network device and is used for instructing the terminal device to query the frequency band capability set which the terminal device supports and to generate the corresponding terminal capability information. The terminal capability information includes the frequency band capability set and the identification information. The frequency band capability set may be an NSA frequency band set, the NSA frequency band set consists of frequency band information of a first network and frequency band information of a second network, and for example, the NSA frequency band set may be formed by combining a frequency band corresponding to a 4G network with a frequency band corresponding to a 5G network.

Exemplarily, the frequency band capability set may include NSA frequency band sets such as B1+N78, B1+N41, B1+N1, B7+N78, and B7+N41.

In some cases, the identification information is used for indicating whether the terminal device has the surplus frequency band capability set, i.e., representing whether the terminal device still has an unreported frequency band capability set after the terminal device reports one or more frequency band capability sets.

Exemplarily, the identification information may indicate that the terminal device has the surplus frequency band capability set by means of an identification bit "1"; and the identification information may indicate that the terminal device does not have the surplus frequency band capability set by means of an identification bit "0".

In some embodiments, the capability query instruction includes target frequency band information of a first network, frequency band information supported by the terminal device of the first network and frequency band information supported by the terminal device of the second network are determined according to the capability query instruction, and a terminal capability set is obtained by combining the frequency band information supported by the terminal device of the first network and the frequency band information supported by the terminal device of the second network; the number of frequency band combinations in the terminal capability set is determined, and the identification information is generated according to the number of frequency band combinations and the preset number of frequency band combinations; and the terminal capability set is screened based on a preset priority strategy and according to the target frequency band information of the first network to obtain the frequency band capability set. As a result, the frequency band combination with higher relevance may be reported in priority, thereby improving the efficiency of the network device in determining whether the terminal device supports the target frequency band combination.

The target frequency band information of the first network may be the frequency band information of the first network in the target frequency band combination, and if the target frequency band combination is B1+N79, the target frequency band information of the first network may be B1 or N79. The preset number of frequency band combinations may be the protocol-limited number of frequency band combinations at the time of terminal capability reporting, for example, it may be 128.

In some cases, after receiving the capability query instruction, the terminal device first queries the frequency band information supported by the terminal device of the first network and the frequency band information supported by the terminal device of the second network, and obtains the terminal capability set by combining the frequency band information supported by the terminal device of the first network and the frequency band information supported by the terminal device of the second network. The number of frequency band combinations in the terminal capability set is determined, and whether the number of frequency band combinations exceeds the preset number of frequency band combinations is determined. If the number of frequency band combinations exceeds the preset number of frequency band combinations, identification information for indicating that the terminal device has a surplus frequency band capability set is generated. If the number of frequency band combinations does not exceed the preset number of frequency band combinations, identification information for indicating that the terminal device does not have a surplus frequency band capability set is generated.

Exemplarily, the number of frequency band combinations in the terminal capability set is determined, and whether the number of frequency band combinations exceeds the preset number of frequency band combinations is determined. If the number of frequency band combinations exceeds the preset number of frequency band combinations, identification information with an identification bit of "1" and used for indicating that the terminal device has a surplus frequency band capability set is generated. If the number of frequency band combinations does not exceed the preset number of frequency band combinations, identification information with an identification bit of "0" and used for indicating that the terminal device does not have a surplus frequency band capability set is generated.

In some embodiments, the frequency band combinations in the terminal capability set are initially sorted according to the target frequency band information of the first network and a geographic location of the terminal device to obtain an initially sorted terminal capability set; the initially sorted terminal capability set is secondly sorted according to a priority of the frequency band information of the second network to obtain a secondly sorted terminal capability set; and the secondly sorted terminal capability set is screened according to the preset number of frequency band combinations to obtain the frequency band capability set. As a result, the frequency band combination with higher relevance may be reported in priority, thereby improving the efficiency of the network device in determining whether the terminal device supports the target frequency band combination.

Exemplarily, if the frequency band information of the first network in the frequency band combinations in the terminal capability set includes a frequency band B1, a frequency band B3, and a frequency band B7; and if the target frequency band information of the first network is B3, the priority of all frequency band combinations with the frequency band information of B3 may be set to be the highest. If the geographic location of this terminal device is Asia, the frequency band B7 is mainly used in the European region, the frequency band B1 is mainly used in the Asian region, therefore, the priority of the frequency band B3 is greater than that of the frequency band B1, and the priority of the frequency band B1 is greater than that of the frequency band B7, so as to obtain the initially sorted terminal capability set. If the frequency band information of the second network in the frequency band combinations in the terminal capability set includes a frequency band N78, a frequency band N41, a frequency band N1, and a frequency band N28, since the degree of popularity is N78>N41>N1>N28, i.e., it may be considered that the priority of the frequency band N78 is greater than that of the frequency band N41 greater than that of the frequency band N1 greater than that of the frequency band N28, so as to obtain the secondly sorted terminal capability set. The secondly sorted terminal capability set is screened according to the preset number of frequency band combinations to obtain the frequency band capability set.

Exemplarily, if the preset number of frequency band combinations is 4, then the terminal capability set of the terminal device includes B1+N78, B1+N41, B1+N1, B1+N28, B7+N78, B7+N41, B7+N1, B7+N28, B3+N78, B3+N41, B3+N1, B3+N28, B3+N79, and B3+N7. If the target frequency band information of the first network is B3, and the priority of the frequency band N78 is greater than that of the frequency band N41 greater than that of the frequency band N1 greater than that of the frequency band N28, the frequency band capability set at this time includes B3+N78, B3+N41, B3+N1, and B3+N28.

Exemplarily, if the preset number of frequency band combinations is 8, then the terminal capability set of the terminal device includes B1+N78, B1+N41, B1+N1, B1+N28, B7+N78, B7+N41, B7+N1, B7+N28, B3+N78, B3+N41, B3+N1, B3+N28, B3+N79, and B3+N7. If the target frequency band information of the first network is B3, then B3+N78, B3+N41, B3+N1, B3+N28, B3+N79, and B3+N7 are reported in priority, and at this time there are 2 empty bits left. If the terminal device is in China, the priority of B1 is greater than that of B7, and the priority of the frequency band N78 is greater than that of the frequency band N41 greater than that of the frequency band N1 greater than that of the frequency band N28, so the left two are reported in priority as follows: B1+N78 and B1+N41. Therefore, the frequency band capability set at this time includes B3+N78, B3+N41, B3+N1, B3+N28, B3+N79, B3+N7, B1+N78, and B1+N41.

In some embodiments, after screening the terminal capability set based on a preset priority strategy and according to the target frequency band information of the first network to obtain the frequency band capability set, the frequency band combinations in the frequency band capability set are removed from the terminal capability set to obtain the surplus frequency band capability set. Thus, a terminal capability full set of the terminal device may be easily obtained at a subsequent network device.

The surplus frequency band capability set consists of unreported frequency band capability sets. By removing already reported frequency band capability sets, it is possible to accurately update the frequency band capability set and avoid repeated uploads of already uploaded frequency band capability sets, which results in a waste of resources.

At step S202, the terminal capability information is sent to the network device, so that when detecting that the frequency band capability set does not include a target frequency band combination, the network device performs target frequency band query or target frequency band configuration on the terminal device according to the identification information, so as to determine whether the terminal device supports the target frequency band combination. The target frequency band combination includes the target frequency band information of the first network and the target frequency band information of the second network.

The target frequency band combination is a frequency band combination that the network device needs to determine whether the terminal device supports, and the target frequency band combination includes the target frequency band information of the first network and the target frequency band information of the second network. The first network may be 4G, 5G or 6G, etc., the second network may also be 4G, 5G or 6G, etc., but the type of the first network different from that of the second network, i.e., if the first network is 4G, the second network can only be 5G or 6G.

Exemplarily, the frequency band information of the first network may be frequency bands such as B1, B3, and B7; and the frequency band information of the second network may be frequency bands such as N78, N41, and N7. It needs to be noted that the frequency band information of the first network may also be frequency bands such as N78, N41, and N7, and the frequency band information of the second network may be frequency bands such as B1, B3, and B7, which is not specifically limited herein.

Specific steps for that the network device performs, when detecting that the frequency band capability set does not include the target frequency band combination, the target frequency band query on the terminal device according to the identification information, so as to determine whether the terminal device supports the target frequency band combination are detailed in step S102.

In some embodiments, a terminal surplus capability query instruction sent by the network device is received, the terminal surplus capability query instruction is generated when the network device detects that the frequency band capability set does not include the target frequency band combination and the identification information indicates that the terminal device has a surplus capability; the number of frequency band combinations in the surplus frequency band capability set is determined according to the terminal surplus capability query instruction, and the identification information is updated according to the number of frequency band combinations and the preset number of frequency band combinations; and the surplus frequency band capability set is screened according to the preset number of frequency band combinations to obtain a target surplus frequency band capability set.

The surplus frequency band capability set is an unreported frequency band capability set, and the target surplus frequency band capability set is a frequency band capability set to be reported after screening the surplus frequency band capability set.

Exemplarily, the number of frequency band combinations in the surplus frequency band capability set is determined first. If the number of frequency band combinations in the surplus frequency band capability set exceeds the preset number of frequency band combinations, then a marker bit of the identification information is updated to "1", and the surplus frequency band capability set is screened according to the preset number of frequency band combinations to obtain the target surplus frequency band capability set. If the number of frequency band combinations in the surplus frequency band capability set does not exceed the preset number of frequency band combinations, then the marker bit of the identification information is updated to "0", there is no need to screen the surplus frequency band capability set, and all frequency band capability sets in the surplus frequency band capability set are reported directly.

It needs to be noted that the specific screening steps of obtaining the target surplus frequency band capability set are similar to the above specific screening steps of obtaining the frequency band capability set.

In some embodiments, a target frequency band configuration instruction sent by the network device is received; where the target frequency band configuration instruction is generated when the network device detects that the frequency band capability set does not include the target frequency band combination and the identification information indicates that the terminal device has a surplus capability; the target frequency band configuration instruction is parsed to obtain the target frequency band information of the second network; and The target frequency band information of the second network is configured to the terminal device, to generate a target frequency band configuration result.

The target frequency band information of the second network may be the frequency band information of the second network in the target frequency band combination, and if the target frequency band combination is B1+N79 and the frequency band information of the first network is B1, the target frequency band information of the second network is N79. The target frequency band configuration result is used for indicating whether the terminal device supports the target frequency band combination.

In some cases, the target frequency band configuration instruction sent by the network device is parsed so as to obtain the target frequency band information of the second network. The target frequency band information of the second network is directly configured to the terminal device to determine whether the terminal device supports the target frequency band combination, so as to generate the target frequency band configuration result.

Exemplarily, if the target frequency band combination is B1+N79, and the frequency band information of the first network is B1, the frequency band N79 is directly configured to the terminal device to determine whether the terminal device supports the frequency band N79, and a corresponding target frequency band configuration result is generated.

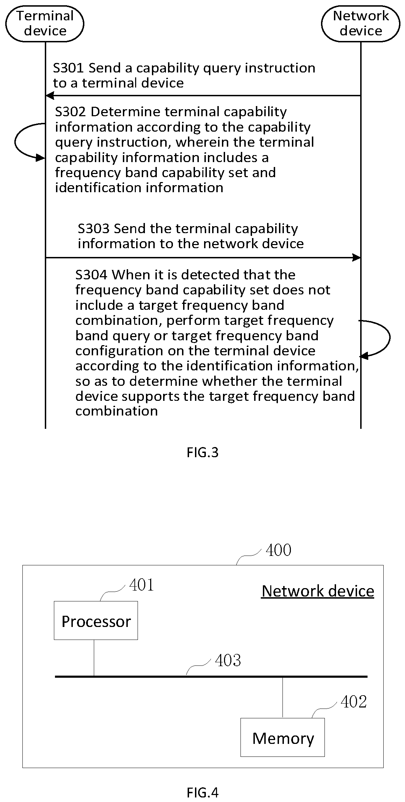

Please refer to FIG. 3, and FIG. 3 is a schematic diagram of an application scenario of a terminal capability reporting method and a terminal capability processing method provided by an embodiment of the present disclosure. The terminal capability reporting method and the terminal capability processing method may be applied to the scenario of a network device and a terminal device, so that whether the terminal device supports a current frequency band combination may be accurately determined, and a communication cell of a corresponding frequency band is accurately added to the terminal device.

In some cases, the network access method may include step S301 to step S304.

At S301, the network device sends a capability query instruction to the terminal device.

At S302, the terminal device determines terminal capability information according to the capability query instruction. The terminal capability information includes a frequency band capability set and identification information.

At S303, the terminal device sends the terminal capability information to the network device.

At S304, the network device performs, when detecting that the frequency band capability set does not include the target frequency band combination, target frequency band query or target frequency band configuration on the terminal device according to the identification information, so as to determine whether the terminal device supports the target frequency band combination.

Please refer to FIG. 4, and FIG. 4 is a schematic structural block diagram of a network device provided by an embodiment of the present disclosure.

As shown in FIG. 4, the network device 400 may include a processor 401 and a memory 402, and the processor 401 and the memory 402 are connected via a bus 403, which is, for example, an inter-integrated circuit (I2C) bus.

In an exemplary implementation, the processor 401 may be used for providing computing and control capabilities, and supporting running of the entire terminal device. The processor 401 may be a central processing unit (CPU), and may further be another general-purpose processor, digital signal processor (DSP), application specific integrated circuit (ASIC), or field-programmable gate array (FPGA) or another programmable logic device, discrete gate or transistor logic device, discrete hardware component, etc. The general-purpose processor may be a microprocessor, or the processor may also be any conventional processor, etc.

In some cases, the memory 402 may be a flash chip, a read-only memory (ROM) disk, an optical disk, a USB flash drive, or a mobile hard disk drive, etc.

Those of skill in the art may understand that the structure shown in FIG. 4, which is only a block diagram of part of the structure related to the solution of the embodiment of the present disclosure, does not constitute a limitation of the terminal device to which the solution of the embodiment of the present disclosure is applied, and that a specific server may include more or fewer parts than those shown in the drawing, or combine some of the parts, or have a different arrangement of the parts.

The processor 401 is used for running a computer program stored in the memory and implementing any terminal capability processing method applied to the network device provided by the embodiments of the present disclosure when executing the computer program.

In an embodiment, the processor 401 is used for running the computer program stored in the memory and implementing the following steps when executing the computer program: sending a capability query instruction to a terminal device, so that the terminal device generates terminal capability information according to the capability query instruction, wherein the terminal capability information includes a frequency band capability set and identification information, and the identification information is used for indicating whether the terminal device has a surplus frequency band capability set; and receiving the terminal capability information, and when it is detected that the frequency band capability set does not include a target frequency band combination, performing target frequency band query or target frequency band configuration on the terminal device according to the identification information, so as to determine whether the terminal device supports the target frequency band combination, where the target frequency band combination includes target frequency band information of a first network and target frequency band information of a second network.

In an embodiment, when performing, when it is detected that the frequency band capability set does not include a target frequency band combination, target frequency band query according to the identification information, so as to determine whether the terminal device supports the target frequency band combination, the processor 401 is configured to implement: when it is detected that the frequency band capability set does not include the target frequency band combination and the identification information indicates that the terminal device has the surplus frequency band capability set, sending a terminal surplus capability query instruction to the terminal device, so that the terminal device determines terminal surplus capability information according to the terminal surplus capability query instruction, wherein the terminal surplus capability information includes the surplus frequency band capability set and updated identification information; and receiving the terminal surplus capability information, and when it is detected that the surplus frequency band capability set does not include the target frequency band combination, performing the target frequency band query on the terminal device according to the updated identification information, so as to determine whether the terminal device supports the target frequency band combination, until the updated identification information indicates that the terminal device does not have a surplus capability.

In an embodiment, when performing, when it is detected that the frequency band capability set does not include a target frequency band combination, target frequency band query according to the identification information, so as to determine whether the terminal device supports the target frequency band combination, the processor 401 is configured to implement: when it is detected that the frequency band capability set does not include the target frequency band combination and the identification information indicates that the terminal device has the surplus frequency band capability set, sending a target frequency band configuration instruction to the terminal device, so that the terminal device performs the target frequency band configuration according to the target frequency band configuration instruction to generate a target frequency band configuration result; and receiving the target frequency band configuration result, and determining whether the terminal device supports the target frequency band combination according to the target frequency band configuration result.

In an embodiment, when performing, after receiving the terminal capability information, target frequency band query according to the identification information, so as to determine whether the terminal device supports the target frequency band combination, the processor 401 is configured to implement: when it is detected that the frequency band capability set includes the target frequency band combination, determining that the terminal device supports the target frequency band combination.

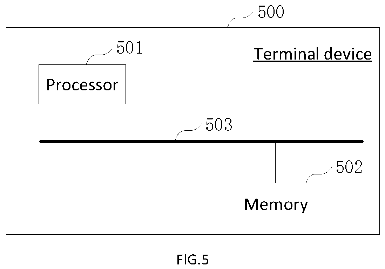

Please refer to FIG. 5, and FIG. 5 is a schematic structural block diagram of a terminal device provided by an embodiment of the present disclosure.

As shown in FIG. 5, the terminal device 500 may include a processor 501 and a memory 502, and the processor 501 and the memory 502 are connected via a bus 503, which is, for example, an inter-integrated circuit (I2C) bus.

In an exemplary implementation, the processor 501 may be used for providing computing and control capabilities, and supporting running of the entire terminal device. The processor 501 may be a central processing unit (CPU), and may further be another general-purpose processor, digital signal processor (DSP), application specific integrated circuit (ASIC), field-programmable gate array (FPGA) or another programmable logic device, discrete gate or transistor logic device, or discrete hardware component, etc. The general-purpose processor may be a microprocessor, or the processor may also be any conventional processor, etc.

In some cases, the memory 502 may be a flash chip, a read-only memory (ROM) disk, an optical disk, a USB flash drive, or a mobile hard disk drive, etc.

Those of skill in the art may understand that the structure shown in FIG. 5, which is only a block diagram of part of the structure related to the solution of the embodiment of the present disclosure, does not constitute a limitation of the terminal device to which the solution of the embodiment of the present disclosure is applied, and that a specific server may include more or fewer parts than those shown in the drawing, or combine some of the parts, or have a different arrangement of the parts.

The processor 501 is used for running a computer program stored in the memory and implementing any terminal capability reporting method applied to the terminal device provided by the embodiments of the present disclosure when executing the computer program.

In an embodiment, the processor 501 is used for running the computer program stored in the memory and implementing the following steps when executing the computer program: obtaining a capability query instruction sent by a network device, and determining terminal capability information according to the capability query instruction, wherein the terminal capability information includes a frequency band capability set and identification information, and the identification information is used for indicating whether the terminal device has a surplus frequency band capability set; and sending the terminal capability information to the network device, so that the network device performs, when detecting that the frequency band capability set does not include a target frequency band combination, target frequency band query or target frequency band configuration on the terminal device according to the identification information, so as to determine whether the terminal device supports the target frequency band combination, wherein the target frequency band combination includes target frequency band information of a first network and target frequency band information of a second network.

In an embodiment, the capability query instruction includes target frequency band information of a first network, and when determining terminal capability information according to the capability query instruction, the processor 501 is configured to implement: determining frequency band information of the first network and frequency band information of the second network supported by the terminal device according to the capability query instruction, and obtaining a terminal capability set in combination; determining the number of frequency band combinations in the terminal capability set, and generating the identification information according to the number of frequency band combinations and the preset number of frequency band combinations; and screening the terminal capability set based on a preset priority strategy and according to the target frequency band information of the first network to obtain the frequency band capability set.

In an embodiment, when screening, the terminal capability set based on the preset priority strategy and according to the target frequency band information of the first network to obtain the frequency band capability set, the processor 501 is configured to implement: initially sorting the frequency band combinations in the terminal capability set according to the target frequency band information of the first network and a geographic location of the terminal device to obtain an initially sorted terminal capability set; secondly sorting the initially sorted terminal capability set according to a priority of the frequency band information of the second network to obtain a secondly sorted terminal capability set; and screening the secondly sorted terminal capability set according to the preset number of frequency band combinations to obtain the frequency band capability set.

In an embodiment, after screening the terminal capability set based on the preset priority strategy and according to the target frequency band information of the first network to obtain the frequency band capability set, the processor 501 is configured to implement: removing frequency band combinations in the frequency band capability set from the terminal capability set to obtain a surplus frequency band capability set.

In an embodiment, the processor 501 is further configured to implement: receiving a terminal surplus capability query instruction sent by the network device, where the terminal surplus capability query instruction is generated when the network device detects that the frequency band capability set does not include the target frequency band combination and the identification information indicates that the terminal device has a surplus capability; determining the number of frequency band combinations in the surplus frequency band capability set according to the terminal surplus capability query instruction, and updating the identification information according to the number of frequency band combinations and the preset number of frequency band combinations; and screening the surplus frequency band capability set according to the preset number of frequency band combinations to obtain a target surplus frequency band capability set.

In an embodiment, the processor 501 is further configured to implement: receiving a target frequency band configuration instruction sent by the network device, where the target frequency band configuration instruction is generated when the network device detects that the frequency band capability set does not include the target frequency band combination and the identification information indicates that the terminal device has a surplus capability; parsing the target frequency band configuration instruction to obtain the target frequency band information of the second network; and configuring the target frequency band information of the second network to the terminal device to generate a target frequency band configuration result.

It needs to be noted that those of skill in the art may clearly understand that for the convenience and brevity of the description, the specific work processes of the terminal device described above may refer to the corresponding processes in the foregoing embodiments of the terminal capability reporting method, which will not be repeated herein.

An embodiment of the present disclosure further provides a storage medium, used for computer readable storage, storing one or more programs, and the one or more programs can be executed by one or more processors to implement steps of any terminal capability reporting method applied to the network device or steps of any terminal capability processing method applied to the terminal device as provided by the specification of the embodiments of the present disclosure.

The storage medium may be an internal storage unit of the terminal device described in the aforementioned embodiments, such as a hard disk or an internal memory of the terminal device. The storage medium may also be an external storage device of the terminal device, such as a plugin hard disk, a smart media card (SMC), a secure digital (SD) card, a flash card, etc. arranged on the terminal device.

It may be understood by those of ordinary skill in the art that all or some of the steps in the methods disclosed above, systems, and functional modules/units in the apparatus may be implemented as software, firmware, hardware, and appropriate combinations thereof. In a hardware embodiment, the division between functional modules/units referred to in the above description does not necessarily correspond to a division of physical components; for example, a physical component may have a plurality of functions, or a function or step may be cooperatively executed by a plurality of physical components. Some or all of the physical components may be implemented as software executed by a processor, such as a central processor, digital signal processor, or microprocessor, or implemented as hardware, or implemented as an integrated circuit, such as an application specific integrated circuit. Such software may be distributed on a computer readable medium, and the computer readable medium may include a computer storage medium (or non-transitory medium) and a communication medium (or transitory medium). As is well known to those of ordinary skill in the art, the term "computer storage medium" includes volatile and non-volatile, removable and non-removable media implemented in any method or technology for storing information, such as a computer readable instruction, data structure, program module, or other data. The computer storage medium includes, but is not limited to, a RAM, a ROM, an EEPROM, a flash memory or another memory technology, a CD-ROM, a digital versatile disk (DVD) or other optical disk storage, a magnetic cartridge, a magnetic tape, magnetic disk storage, or another magnetic storage apparatus, or any other medium that may be used for storing desired information and that may be accessed by a computer. In addition, it is well known to those of ordinary skill in the art that the communication medium typically contains a computer readable instruction, a data structure, a program module, or other data in a modulated data signal such as a carrier wave or other transmission mechanism, and may include any information delivery medium.

It should be understood that the term "and/or" as used in the specification of embodiments of the present disclosure and the appended claims refers to one of the items listed in association or any combination and all possible combinations of some of them and includes these combinations. It needs to be noted that in this context, terms "include", "contain", or any other variant thereof, are intended to cover non-exclusive inclusion, so that a process, method, item or system that includes a series of elements includes not only those elements but also other elements that are not explicitly listed or further includes elements that are inherent to such a process, method, item or system. Without further limitation, an element defined by a phrase "including a ..." does not exclude the existence of other identical elements in the process, method, item or system including the element.

The above serial numbers of the embodiments of the present disclosure are only for the purpose of description, and does not represent superiority and inferiority of the embodiments. The above is merely the specific embodiments of the present disclosure, but the protection scope of the embodiments of present disclosure is not limited thereto. Any person of skill in the art may readily think of various equivalent modifications or replacements within the scope of the technology disclosed in the present disclosure, and these modifications or substitutions should be covered within the protection scope of the embodiments of the present disclosure. Thus, the protection scope of the embodiments of the present disclosure shall be subject to the protection scope of the claims.

## Claims

1. A terminal capability processing method, applied to a network device, comprising:
sending a capability query instruction to a terminal device, so that the terminal device generates terminal capability information according to the capability query instruction, wherein the terminal capability information comprises a frequency band capability set and identification information, and the identification information is used for indicating whether the terminal device has a surplus frequency band capability set; and
receiving the terminal capability information, and performing, in response to detecting that the frequency band capability set does not comprise a target frequency band combination, target frequency band query or target frequency band configuration on the terminal device according to the identification information, so as to determine whether the terminal device supports the target frequency band combination, wherein the target frequency band combination comprises target frequency band information of a first network and target frequency band information of a second network.

2. The method according to claim 1, wherein performing, in response to detecting that the frequency band capability set does not comprise the target frequency band combination, target frequency band query according to the identification information, so as to determine whether the terminal device supports the target frequency band combination comprises:
sending, in response to detecting that the frequency band capability set does not comprise the target frequency band combination and the identification information indicates that the terminal device has the surplus frequency band capability set, a terminal surplus capability query instruction to the terminal device, so that the terminal device determines terminal surplus capability information according to the terminal surplus capability query instruction, wherein the terminal surplus capability information comprises the surplus frequency band capability set and updated identification information; and
receiving the terminal surplus capability information, and performing, in response to detecting that the surplus frequency band capability set does not comprise the target frequency band combination, target frequency band query on the terminal device according to the updated identification information, so as to determine whether the terminal device supports the target frequency band combination, until the updated identification information indicates that the terminal device does not have a surplus capability.

3. The method according to claim 1, wherein performing, in response to detecting that the frequency band capability set does not comprise the target frequency band combination, target frequency band configuration according to the identification information, so as to determine whether the terminal device supports the target frequency band combination comprises:
sending, in response to detecting that the frequency band capability set does not comprise the target frequency band combination and the identification information indicates that the terminal device has the surplus frequency band capability set, a target frequency band configuration instruction to the terminal device, so that the terminal device performs target frequency band configuration according to the target frequency band configuration instruction to generate a target frequency band configuration result; and
receiving the target frequency band configuration result, and determining whether the terminal device supports the target frequency band combination according to the target frequency band configuration result.

4. The method according to claim 1, after receiving the terminal capability information, further comprising:
determining, in response to detecting that the frequency band capability set comprises the target frequency band combination, that the terminal device supports the target frequency band combination.

5. A terminal capability reporting method, applied to a terminal device, comprising:
obtaining a capability query instruction sent by a network device, and determining terminal capability information according to the capability query instruction, wherein the terminal capability information comprises a frequency band capability set and identification information, and the identification information is used for indicating whether the terminal device has a surplus frequency band capability set; and
sending the terminal capability information to the network device, so that the network device performs, in response to detecting that the frequency band capability set does not comprise a target frequency band combination, target frequency band query or target frequency band configuration on the terminal device according to the identification information, so as to determine whether the terminal device supports the target frequency band combination, wherein the target frequency band combination comprises target frequency band information of a first network and target frequency band information of a second network.

6. The method according to claim 5, wherein the capability query instruction comprises the target frequency band information of the first network, and determining the terminal capability information according to the capability query instruction comprises:
determining frequency band information supported by the terminal device of the first network and frequency band information supported by the terminal device of the second network according to the capability query instruction, and obtaining a terminal capability set by combining the frequency band information supported by the terminal device of the first network and the frequency band information supported by the terminal device of the second network;
determining a number of frequency band combinations in the terminal capability set, and generating the identification information according to the number of frequency band combinations and a preset number of frequency band combinations; and
screening, based on a preset priority strategy and according to the target frequency band information of the first network, the terminal capability set to obtain the frequency band capability set.

7. The method according to claim 6, wherein screening, based on the preset priority strategy and according to the target frequency band information of the first network, the terminal capability set to obtain the frequency band capability set comprises:
initially sorting the frequency band combinations in the terminal capability set according to the target frequency band information of the first network and a geographic location of the terminal device to obtain an initially sorted terminal capability set;
secondly sorting the initially sorted terminal capability set according to a priority of the frequency band information of the second network to obtain a secondly sorted terminal capability set; and
screening the secondly sorted terminal capability set according to the preset number of frequency band combinations to obtain the frequency band capability set.

8. The method according to claim 6, after screening, based on the preset priority strategy and according to the target frequency band information of the first network, the terminal capability set to obtain the frequency band capability set, further comprising:
removing frequency band combinations in the frequency band capability set from the terminal capability set to obtain the surplus frequency band capability set.

9. The method according to claim 8, wherein the method further comprises:
receiving a terminal surplus capability query instruction sent by the network device, wherein the terminal surplus capability query instruction is generated in the case that the network device detects that the frequency band capability set does not comprise the target frequency band combination and the identification information indicates that the terminal device has a surplus capability;
determining the number of frequency band combinations in the surplus frequency band capability set according to the terminal surplus capability query instruction, and updating the identification information according to the number of frequency band combinations and the preset number of frequency band combinations; and
screening the surplus frequency band capability set according to the preset number of frequency band combinations to obtain a target surplus frequency band capability set.

10. The method according to claim 5, wherein the method further comprises:
receiving a target frequency band configuration instruction sent by the network device, wherein the target frequency band configuration instruction is generated in the case that the network device detects that the frequency band capability set does not comprise the target frequency band combination and the identification information indicates that the terminal device has a surplus capability;
parsing the target frequency band configuration instruction to obtain the target frequency band information of the second network; and
configuring the target frequency band information of the second network to the terminal device, to generate a target frequency band configuration result.

11. A network device, comprising:
a processor, a memory, a computer program stored on the memory and capable of being executed by the processor, and a data bus for implementing a connected communication between the processor and the memory, wherein the computer program, when executed by the processor, implements steps of the terminal capability processing method according to any one of claims 1 to 4.

12. A terminal device, comprising:
a processor, a memory, a computer program stored on the memory and capable of being executed by the processor, and a data bus for implementing a connected communication between the processor and the memory, wherein the computer program, when executed by the processor, implements steps of the terminal capability reporting method according to any one of claims 5 to 10.

13. A storage medium, used for computer readable storage, storing one or more programs, wherein the one or more programs can be executed by one or more processors to implement steps of the terminal capability processing method according to any one of claims 1 to 4 or steps of the terminal capability reporting method according to any one of claims 5 to 10.
